(19) Europäisches Patentamt
European Patent Office
Office européen des brevets

(11) Veröffentlichungsnummer: **0 399 298 B1**

(12) **EUROPÄISCHE PATENTSCHRIFT**

(45) Veröffentlichungstag der Patentschrift: **15.11.95**

(51) Int. Cl.$^6$: **C09K 19/42**, G02F 1/137, C09K 19/30, C09K 19/34

(21) Anmeldenummer: **90108790.8**

(22) Anmeldetag: **10.05.90**

# (54) Flüssigkristallmedium mit einer smektischen C-Phase.

(30) Priorität: **20.05.89 DE 3916508**
**20.05.89 DE 3916509**
**22.09.89 DE 3931707**

(43) Veröffentlichungstag der Anmeldung:
**28.11.90 Patentblatt 90/48**

(45) Bekanntmachung des Hinweises auf die Patenterteilung:
**15.11.95 Patentblatt 95/46**

(84) Benannte Vertragsstaaten:
**DE GB**

(56) Entgegenhaltungen:
**EP-A- 0 269 062**
**EP-A- 0 315 701**
**EP-A- 0 332 025**
**WO-A-89/02425**

(73) Patentinhaber: **HOECHST AKTIENGESELL-SCHAFT**

**D-65926 Frankfurt am Main (DE)**

(72) Erfinder: **Reiffenrath, Volker**
**Jahnstrasse 18**
**D-6101 Rossdorf (DE)**
Erfinder: **Geelhaar, Thomas, Dr.**
**Trojanstrasse 12**
**D-6500 Mainz (DE)**

**EP 0 399 298 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Flüssigkristallmedium mit einer smektisch-C-Phase, enthaltend mindestens 2 flüssigkristalline Komponenten A und B, wobei Komponente A aus einer oder mehreren Verbindungen besteht und Komponente A und/oder die diese Komponente bildenden Verbindungen eine oder mehrere orthogonale und/oder höher geordnete getiltete smektische Phasen und gegebenenfalls eine smektisch-C-Phase aufweisen, wobei weiter Komponente B aus einer oder mehreren Verbindungen besteht und Komponente B und/oder die diese Komponente bildenden Verbindungen gegebenenfalls eine smektisch-C-Phase aufweisen.

Smektische Phasen werden nach den im Polarisationsmikroskop sichtbaren Texturen klassifiziert und als smektische Phasen vom Typ A, B, C ... bezeichnet. Alle smektischen Phasentypen weisen eine Parallelstellung und Anordnung der Moleküle in Schichten auf, wobei jedoch die Art der molekularen Ordnung verschieden ist.

Man kann zwischen orthogonalen und getilteten smektischen Phasen unterscheiden. Bei orthogonalen Strukturen sind die langen Moleküllachsen im Mittel senkrecht zur Schichtebene angeordnet, während in getilteten Phasen die Moleküle im Mittel um den Tiltwinkel gegen die Flächennormale geneigt sind. Chirale getiltete Phasen sind ferroelektrisch, so daß ihnen für SSFLC-Displays eine besondere Bedeutung zukommt.

Bei den beiden orthogonalen $S_A$- und $S_B$-Phasen entspricht der Schichtabstand etwa der Länge der flüssigkristallinen Moleküle. In der $S_A$-Phase haben die Moleküle innerhalb der Schichten eine beträchtliche Freiheit der Translation und der Rotation um die Längsachse der Moleküle. Die Molekülschichten sind wegen dieser relativ lockeren molekularen Organisation Ziemlich flexibel. Demgegenüber zählt die orthogonale $S_B$-Phase, bei der die Moleküle in den Schichten hexagonal dicht gepackt sind zu den höher geordneten smektischen Phasen.

Bei den getilteten smektischen Phasen ist der Schichtabstand im Mittel kleiner als die Länge der flüssigkristallinen Moleküle. Zu den getilteten smektischen Phasen zählen z.B. die $S_C$-Phase, die einen relativ geringen Ordnungsgrad der Moleküle innerhalb der Schichten aufweist, die höher geordneten flüssigkristallinen smektischen Phasen $S_I$ und $S_F$ und die kristallinen smektischen Phasen $S_G$, $S_H$, $S_K$ und $S_J$.

Höher geordnete smektische Phasen sind ganz allgemein dadurch gekennzeichnet, daß sie neben der Anordnung der Moleküle in Schichten noch eine Korrelation der Molekülschwerpunkte aufweisen.

Beispiele der Verbindungen, die $S_A$-Phasen aufweisen, sind:

(1) Schiff'sche Basen

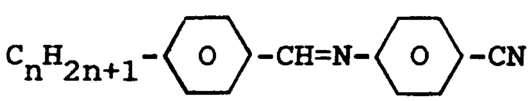

(n ≧ 3)

(2) Alkyl-cyanobiphenyle

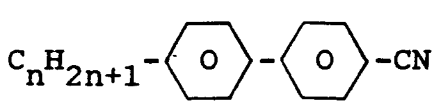

(n ≧ 8)

(3) Alkoxy-cyanobiphenyle

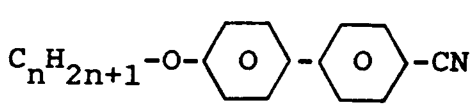

(n ≧ 8)

Der Zusammenhang zwischen dem Auftreten höher geordneter smektischer Phasentypen und insbesondere der $S_B$-Phase und der Molekülstruktur der flüssigkristallinen Verbindungen ist bisher nicht Gegenstand umfangreicher Untersuchungen gewesen. Im folgenden sollen daher nur einige Verbindungen mit $S_B$-Phasen beispielhaft aufgezählt werden, wobei diese Aufzählung ebenso wie die der oben angegebenen $S_A$-Verbindungen die Erfindung lediglich erläutern, jedoch nicht beschränken soll. Es bedeuten: K: kristallin-fester Zustand, N: nematische Phase, I: isotrope Phase. Die zwischen 2 Phasensymbolen stehende Zahl

gibt die Umwandlungstemperatur in °C an:

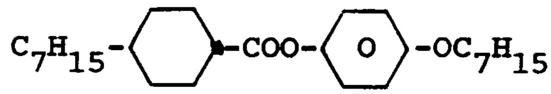

K 41 $S_B$ 62 $S_A$ 73 N 79 I

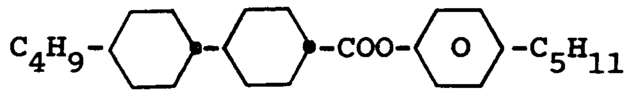

K 7 $S_B$ 169 N 185 I

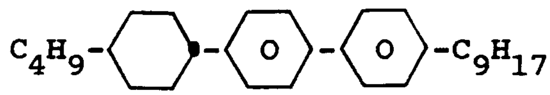

K 32 $S_B$ 155 I

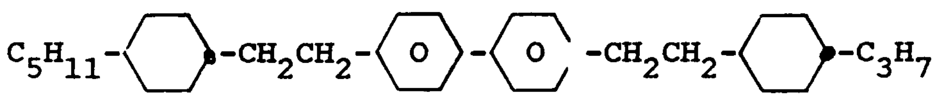

K 66 $S_J$ 147 $S_B$ 191 $S_A$ 214 N 227 I

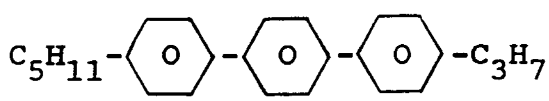

K 180 $S_E$ 200 $S_B$ 214 $S_A$ 218 I

Chirale getiltete smektische Phasen, die durch Dotierung einer smektischen Basismischung mit einem chiralen Dotierstoff erhalten werden können (W. Kuczynski, H. Stegemeyer, Chem. Phys. Lett. 70 (1983), 123) sind ferroelektrisch und können z.B. als Dielektrika für schnell schaltende Displays verwendet werden, die auf dem von Clark und Lagerwall beschriebenen Prinzip der SSFLC-Technologie beruhen (N.A. Clark und S.T. Lagerwall, Appl. Phys. Lett. 36 (1980), 899; US 4,367,924). Von den flüssigkristallinen getilteten chiralen smektischen Phasen ist die $S_C$*-Phase besonders geeignet und daher auch in bisher hergestellten Displays ganz überwiegend verwendet worden.

Die Anforderungen an in derartigen elektrooptischen Systemen verwendeten $S_C$*-Phasen sind noch:

(i) die $S_C$*-Phase soll in einem möglichst weiten Temperaturbereich um die Umgebungstemperatur existieren.

(ii) die die $S_C$*-Phase bildenden Flüssigkristallverbindungen sollen chemisch stabil und rein sein.

(iii) die Materialparameter des Flüssigkristalls, wie z.B. spontane Polarisation $P_s$, optische Anisotropie $\Delta n$, Fließviskosität $\eta$, dielektrische Anisotropie $\Delta\epsilon$, Tiltwinkel $\theta$ und Pitch p sollten optimiert sein.

Bei nematischen (N) Phasen oder $S_A$-Phasen kann der Phasenbereich im allgemeinen dadurch erweitert werden, daß eine Mischung verschiedener N- oder $S_A$-Komponenten hergestellt wird, wobei sich häufig eine mittlere Phasenübergangstemperatur $T_{N-I}$ bzw.

$$T_{S_A-I}'$$

jedoch eine gegenüber dem mittleren Schmelzpunkt erniedrigte Schmelztemperatur einstellt. Dieses Verfahren ist nicht ohne weiteres auf $S_C$-Phasen übertragbar, da bei der Mischung von $S_C$-Phasen manchmal eine $S_B$-Phase induziert wird oder die $S_C$-Phase durch eine dominierende $S_A$-Phase auf einen engen Temperaturbereich eingeschränkt wird. Zudem weisen viele smektische Verbindungen im üblichen Arbeitsbereich von Flüssigkristalldisplays von -30 °C bis 80 °C neben einer $S_C$-Phase dominierende höher geordnete smektische Phasen auf, durch die dann der Phasentyp der jeweiligen Mischung bestimmt oder erheblich beeinflußt wird. Die Palette von Substanzen, die eine $S_C$-Phase mit großem Phasenbereich aufweisen und sich durch eine hohe chemische Stabilität und Reinheit auszeichnen, ist daher wesentlich kleiner als der Pool nematischer Verbindungen, so daß die Mischungsmöglichkeiten für Medien mit smektischer Phase erheblich eingeengt sind.

Somit ist die Forderung, $S_C$-Phasen bereitzustellen, die die Anforderungen (i) und (ii) erfüllen, nicht trivial und das Problem, die Anforderungen (i)-(iii) gleichzeitig zu erfüllen, kann als weitgehend ungelöst betrachtet werden.

Es besteht somit immer noch ein erheblicher Bedarf an Mischungskonzepten, die eine möglichst breite Palette von Verbindungen, die eine oder mehrere orthogonale und/oder höher geordnete getiltete smektische Phasen und/oder gegebenenfalls eine smektisch-C-Phase aufweisen, für die Bereitstellung von flüssigkristallinen Medien mit einer $S_C$-Phase erschließen und somit den Spielraum für eine gleichzeitige Erfüllung der Anforderungen (i)-(iii) erheblich erweitern.

Der Erfindung lag die Aufgabe zugrunde, neue Flüssigkristallmedien mit einer $S_C$-Phase bereitzustellen, die mindestens zwei verschiedene flüssigkristalline Komponenten A und B enthalten, wobei die Komponente A aus einer oder mehreren Verbindungen besteht und die Komponente A und/oder die diese Komponente bildenden Verbindungen eine oder mehrere orthogonale und/oder höher angeordnete getiltete smektische Phasen und gegebenenfalls eine smektisch-C-Phase aufweisen und wobei weiter die Komponente B aus einer oder mehreren Verbindungen besteht und die Komponente B und/oder die diese Komponente bildenden Verbindungen gegebenenfalls eine smektisch-C-Pase aufweisen.

Überraschenderweise wurde nun gefunden, daß diese aufgabe durch die Bereitstellung der erfindungsgemäßen Flüssigkristallmedien gelöst werden kann.

Gegenstand der Erfindung ist somit ein Flüssigkristallmedium mit einer smektisch-C-Phase, enthaltend mindestens zwei flüssigkristalline Komponenten A und B, wobei Komponente A aus einer oder mehreren Verbindungen besteht und Komponente A und/oder die diese Komponente bildenden Verbindungen eine oder mehrere orthogonale und/oder höher geordnete getiltete smektische Phasen und gegebenenfalls eine smektisch-C-Phase aufweisen, wobei weiter die Komponente B aus einer oder mehreren Verbindungen besteht und Komponente B und/oder die diese Komponente bildenden Verbindungen gegebenenfalls eine smektisch-C-Phase aufweisen, dadurch gekennzeichnet, daß Komponente B zur Unterdrückung der höher geordneten smektischen Phasen und/oder - falls weder Komponente A noch Komponente B noch die diese Komponenten bildenden Verbindungen eine smektisch-C-Phase aufweisen - zur Erzeugung der smektisch-C-Phase mindestens eine Verbindung mit dem Strukturelement 2-Fluor-1,4-phenylen oder 2,3-Difluor-1,4-phenylen enthält.

Die Komponente B enthält vorzugsweise mindestens eine Verbindung der Formel I

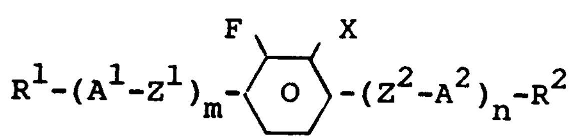

I

worin

$R^1$ und $R^2$ jeweils unabhängig voneinander unsubstituiertes, einfach durch Cyan oder mindestens einfach durch Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, -S-, -CO-, -O-CO-, -CO-O- oder -O-CO-O- ersetzt sein kann, einer der Reste $R^1$ und $R^2$ auch einen Chiralität induzierten organischen Rest Q* mit einem asymmetrischem Kohlenstoffatom,

$A^1$ und $A^2$ jeweils unabhängig voneinander unsubstituiertes oder durch ein oder zwei F-und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl,

| | |
|---|---|
| | Naphthalin-2,6-diyl- oder 1,2,3,4-Tetrahydronaphthalin-2,6-diyl, |
| $Z^1$ und $Z^2$ | jeweils unabhängig voneinander -CO-O-, -O-CO-, $-CH_2CH_2-$, $-OCH_2-$, $-CH_2O-$, -C≡C- oder eine Einfachbindung, |
| X | H oder F, |
| m und n | jeweils 0, 1 oder 2, und |
| (m + n) | 1 oder 2 bedeutet. |

Der Rest Q* ist bevorzugt durch die Formel II

$$-Q^1-C^*R°X-Q^2-R^2 \qquad II$$

gegeben, worin

| | |
|---|---|
| $Q^1$ und $Q^2$ | jeweils unabhängig voneinander Alkylen mit 2 bis 4-C-Atomen, worin auch eine $CH_2$-Gruppe durch -O-, -S-, -CO-, -O-CO-, -CO-O-, -S-CO-, -CO-S-, -CH=CH-COO-, -CH=CH-, -CHHalogen und/oder -CHCN- ersetzt sein kann, oder eine Einfachbindung, |
| X | Halogen, CN, $CH_3$, $CH_2CN$ oder $OCH_3$, |
| R° | H oder eine von X und $-Q^2-R^2$ verschiedene Alkylgruppe mit 1 bis 10 C-Atomen, und |
| C* | ein mit vier verschiedenen Substituenten verknüpftes Kohlenstoffatom bedeutet. |

Das Flüssigkristallmedium weist bevorzugt eine Spontanpolarisation $P_s$ auf, die größer als 1 nC/cm² ist.

Weiter enthält das Flüssigkristallmedium bevorzugt mindestens einen chiralen Dotierstoff. Dabei weist der chirale Dotierstoff bevorzugt eine Spontanpolarisation > 5 nC/cm² auf.

Gegenstand der Erfindung sind weiter die Verwendung der erfindungsgemäßen Flüssigkristallmedien in elektrooptischen Systemen sowie elektrooptische Systeme, die die erfindungsgemäßen Flüssigkristallmedien enthalten.

Die eine $S_C$-Phase aufweisenden erfindungsgemäßen Flüssigkristallmedien setzen sich aus mindestens 2 flüssigkristallinen Komponenten A und B zusammen. Die Komponente A und/oder die diese Komponente bildenden Verbindungen weisen eine oder mehrere orthogonale und/oder höher geordnete getiltete smektische Phasen und gegebenenfalls eine smektisch-C-Phase auf.

Neben der Komponente A enthalten die erfindungsgemäßen flüssigkristallinen Medien mindestens eine weitere Komponente B. Komponente B besteht aus einer oder mehreren Verbindungen, wobei die Komponente B und/oder die diese Komponente bildenen Verbindungen gegebenenfalls eine smektisch-C-Phase aufweisen. Weiter enthält die Komponente B zur Unterdrückung der höher geordneten smektischen Phasen und/oder - falls weder Komponente A noch Komponente B noch die diese Verbindung bildenden Verbindungen eine smektisch-C-Phase aufweisen - zur Erzeugung der smektisch-C-Phase mindestens eine Verbindung mit dem Strukturelement

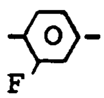 oder 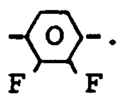.

Besonders bevorzugt ist eine kleinere Gruppe erfindungsgemäßer Flüssigkristallmedien mit einer smektisch-C-Phase, enthaltend mindestens zwei flüssigkristalline Komponenten A und B, wobei Komponente A aus einer oder mehreren Verbindungen besteht und die Komponente A und/oder die diese Komponente bildenden Verbindungen lediglich eine smektisch-A- und/oder smektisch-B-Phase, jedoch keine smektisch-C-Phase aufweisen und Komponente B aus einer oder mehreren Verbindungen besteht und zur Erzeugung der smektisch-C-Phase mindestens eine Verbindung mit dem Strukturelement 2-Fluor-1,4-phenylen oder 2,3-Difluor-1,4-phenylen enthält.

Besonders bevorzugt ist weiter eine andere kleinere Gruppe erfindungsgemäßen Flüssigkristallmedien mit einer smektisch-C-Phase, enthaltend mindestens zwei flüssigkristalline Komponenten A und B, wobei Komponente A aus einer oder mehreren Verbindungen besteht und Komponente A und/oder die diese Komponente bildenden Verbindungen neben einer smektisch-C-Phase noch orthogonale und/oder höher geordnete getiltete smektische Phasen und/oder nur orthogonale und/oder höher geordnete getiltete smektische Phasen aufweisen und Komponente B aus einer oder mehreren Verbindungen besteht, wobei mindestens eine Verbindung der Komponente B eine smektische-C-Phase aufweist, falls die die Komponente A bildenden Verbindungen keine smektisch-C-Phase aufweisen, und wobei Komponente B zur Unterdrükkung der höher geordneten smektischen Phasen mindestens eine Verbindung mit dem Strukturelement 2-Fluor-1,4-phenylen oder 2,4-Difluor-1,4-phenylen enthält.

Die Herstellung von Verbindungen mit diesem Strukturelement ist z.B. in DE 38 07 801, DE 38 07 823, DE 38 07 803, DE 38 07 870, DE 38 07 819, DE 38 07 861, DE 38 07 871, DE 38 07 802 und DE 38 07 862 beschrieben. Dabei kann man auch von an sich bekannten, hier nicht näher erwähnten Varianten Gebrauch machen. Die Ausgangsstoffe können gewünschtenfalls auch in situ gebildet werden, derart, daß man sie aus dem Reaktionsgemisch nicht isoliert, sondern sofort weiter zu den Zielverbindungen umsetzt.

Komponente B enthält bevorzugt mindestens eine Verbindung der Formel I

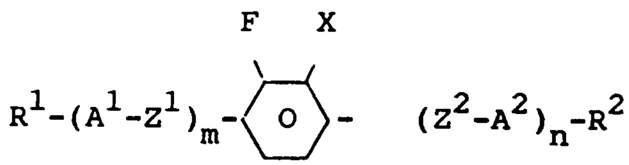

I

worin

- $R^1$ und $R^2$ jeweils unabhängig voneinander unsubstituiertes, einfach durch Cyan oder mindestens einfach durch Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, -S-, -CO-, -O-CO-, -CO-O- oder -O-CO-O- ersetzt sein kann, einer der Reste $R^1$ und $R^2$ auch einen Chiralität induzierten organischen Rest Q* mit einem asymmetrischem Kohlenstoffatom,
- $A^1$ und $A^2$ jeweils unabhängig voneinander unsubstituiertes oder durch ein oder zwei F-und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl- oder 1,2,3,4-Tetrahydronaphthalin-2,6-diyl,
- $Z^1$ und $Z^2$ jeweils unabhängig voneinander -CO-O-, -O-CO-, $-CH_2CH_2-$, $-OCH_2-$, $-CH_2O-$, -C≡C- oder eine Einfachbindung,
- X H oder F,
- m und n jeweils 0, 1 oder 2, und
- (m + n) 1 oder 2 bedeutet.

Die Verbindungen der Formel I umfassen 2- und 3-kernige 2-Fluor- und 2,3-Difluor-1,4-phenylenderivate. Von den 2-kernigen, welche bevorzugt sind, sind diejenigen bevorzugt, worin $R^1$ n-Alkyl oder n-Alkoxy mit 5-12, insbesondere mit 7-10 C-Atomen bedeutet.

Weiter bevorzugt sind 3-kernige Verbindungen der Formel I mit m = n = 1 oder m = 0 und n = 2.

Bevorzugte Verbindungen der Formel I sind weiter in DE 38 07 801, DE 38 07 823, DE 38 07 803, DE 38 07 870, DE 38 07 819, DE 38 07 861, DE 38 07 871 und DE 38 07 802 beschrieben.

$R^1$ und $R^2$ sind jeweils unabhängig voneinander vorzugsweise Alkyl, Alkoxy, Alkanoyl, Alkanoyloxy, Alkoxycarbonyl oder Alkoxycarbonyloxy mit jeweils vorzugsweise 5 bis 12, insbesondere 6 bis 10 C-Atomen. Besonders bevorzugt sind Alkyl und Alkoxy. Vorzugsweise ist eine der Gruppen $R^1$ und $R^2$ Alkyl. Eine besonders bevorzugte Kombination ist $R^1$ = Alkyl und $R^2$ = Alkoxy und ferner $R^1$ Alkoxy und $R^2$ = Alkyl. Besonders bevorzugt sind $R^1$- und $R^2$-Gruppen mit geradkettigem Alkylrest.

Weiterhin bevorzugt sind Verbindungen der Formel I, worin $R^1$ n-Alkyl mit 5-13 C-Atomen bedeutet und $R^2$ n-Alkyl, n-Alkoxy, n-Alkanoyloxy, n-Alkoxycarbonyl oder n-Alkylthio mit 5-11 C-Atomen ist.

Weiter bevorzugt sind solche Verbindungen der Formel I, bei denen einer der Reste $R^1$ und $R^2$ einen Rest der Formel II

$$-Q^1-C^*R^\circ X-Q^2-R^2 \qquad \text{II}$$

bedeutet, worin

- $Q^1$ und $Q^2$ jeweils unabhängig voneinander Alkylen mit 2 bis 4-C-Atomen, worin auch eine $CH_2$-Gruppe durch -O-, -S-, -CO-, -O-CO-, -CO-O-, -S-CO-, -CO-S-, -CH=CH-COO-, -CH=CH-, -CHHalogen und/oder -CHCN- ersetzt sein kann, oder eine Einfachbindung,
- X Halogen, CN, $CH_3$, $CH_2CN$ oder $OCH_3$,
- $R^\circ$ H oder eine von X und $-Q^2-R^2$ verschiedene Alkylgruppe mit 1 bis 10 C-Atomen, und
- C* ein mit vier verschiedenen Substituenten verknüpftes Kohlenstoffatom bedeutet.

Die Verwendung einer oder mehrerer Verbindungen der Formel I mit einem solchen Rest II führt zu einem erfindungsgemäßen Flüssigkristallmedium mit einer chiralen $S_C$*-Phase, die ferroelektrische Eigenschaften aufweist. $Q^1$ in Formel II ist bevorzugt n-Alkyl, n-Alkoxy, n-Alkanoyloxy und n-Alkoxycarbonyl mit 2-4 C-Atomen. Weiter bevorzugt bedeutet $Q^1$

$$-CH=\overset{\overset{Y}{|}}{C}-COO-W-$$

worin

Y F, Cl, CN oder H und

W $-CH_2-$ oder eine Einfachbindung bedeutet.

X in Formel II ist bevorzugt Halogen, CN, $OCH_3$ und $CH_3$, insbesondere jedoch F, Cl, CN, $OCH_3$ und $CH_3$ und ganz besonders $CH_3$.

$R^\circ$ in Formel II ist bevorzugt H, n-Alkyl oder n-Alkoxy mit 1-3 C-Atomen, insbesondere jedoch H, $CH_3$ und $CH_3O$ und ganz besonders H.

$Q^2$-$R^2$ in Formel II ist bevorzugt n-Alkyl oder n-Alkoxy mit 1-5 C-Atomen, insbesondere jedoch n-Alkyl mit 1-3 C-Atomen.

Da die Schaltzeit $\tau$ von SSFLC-Displays umgekehrt proportional zur Spontanpolarisation $P_s$ ist, sind erfindungsgemäße Flüssigkristallmedien mit hoher Spontanpolarisation bevorzugt. $P_s$ ist bevorzugt größer als 1 $nC/cm^2$, insbesondere jedoch größer als 5 $nC/cm^2$ und ganz besonders größer als 10 $nC/cm^2$.

Die in SSFLC-Displays verwendeten Flüssigkristallmedien müssen ferroelektrische Eigenschaften aufweisen. Dies kann dadurch erreicht werden, daß eine oder mehrere Komponenten des Flüssigkristallmediums ein chirales zentrum aufweisen, und/oder daß dem $S_C$-Basismedium ein oder mehrere chirale Dotierstoffe zugesetzt werden. Die Dotierstoffe können mesogen oder auch nicht-mesogen sein, weisen dann aber bevorzugt eine Flüssigkristallmolekülen ähnliche Struktur auf. Die Verwendung chiraler Dotierstoffe mit hoher Spontanpolarisation $P_s$ ist bevorzugt, da auf diese Weise die Spontanpolarisation praktisch unabhängig von anderen Eigenschaften des Mediums, wie z.B. dem Phasenbereich, der Viskosität usw. beeinflußt werden kann. Bevorzugt sind chirale Dotierstoffe, deren Spontanpolarisation $P_s$ größer als 10 $nC/cm^2$ ist.

Die erfindungsgemäßen Flüssigkristallmedien können in elektrooptischen Systemen verwendet werden. Der Begriff elektrooptische Systeme ist hier weit gefaßt und umschließt alle Systeme, bei denen Flüssigkristallmedien, die eine $S_C$- oder $S_C$*-Phase aufweisen, verwendet werden.

Dabei sind solche elektrooptischen Systeme bevorzugt, die auf dem Prinzip der SSFLC-Technologie beruhen. In diesen Systemen sind die smektischen Schichten senkrecht zu den Platten der Zelle angeordnet. Die helixartige Anordnung der Tiltrichtungen der Moleküle wird durch einen sehr geringen Abstand der Platten (ca. 1-2 $\mu$m) unterdrückt. Dadurch werden die Längsachsen der Moleküle gezwungen, sich in einer Ebene parallel zu den Platten der Zelle anzuordnen, wodurch zwei ausgezeichnete Tiltorientierungen entstehen. Durch Anlegen eines geeigneten elektrischen Wechselfeldes kann in der eine spontane Polarisation aufweisenden flüssigkristallinen Phase zwischen diesen beiden Zuständen hin- und hergeschaltet werden. Dieser Schaltvorgang ist wesentlich schneller als bei herkömmlichen verdrillten Zellen (TN-LCD's), die auf nematischen Flüssigkristallen basieren.

Weiter bevorzugt werden die erfindungsgemäßen Flüssigkristallmedien in elektrooptischen Systemen verwendet, bei denen eine flüssigkristalline Polymerzusammensetzung benutzt wird, die aus einem ferroelektrischen flüssigkristalinen Polymer und einem niedermolekularen flüssigkristallinen Medium mit einer $S_C$- oder $S_C$*-Phase besteht. Derartige bevorzugte elektrooptische Systeme sind z.B. in EP 0,297,554 beschrieben.

Die Herstellung der erfindungsgemäßen Phasen erfolgt in an sich üblicher Weise. In der Regel werden die Komponenten ineinander gelöst, zweckmäßig bei erhöhter Temperatur.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Beispiele

Beispiel 1 für flüssigkristalline Medien

In dem eine $S_B$- und $S_A$-Phase, jedoch keine $S_C$-Phase aufweisenden 4-Heptoxyphenyl-trans-4-heptyl-cyclohexylcarboxylat (1) wird durch zugabe von 4-(trans-4-pentylcyclohexyl)-phenyl-2,3-difluor-4-octoxybenzoat (2) die höher geordnete $S_B$-Phase bereits bei geringen Konzentrationen von (2) unterdrückt und in einem breiten Mischungsbereich eine $S_C$-Phase erzeugt, wie dies in Fig. 1 dargestellt ist.

| Flüssigkristall | Phasenfolge und -umwandlungstemperatur |
|---|---|
| (1) | K 41 $S_B$ 62 $S_A$ 73 N 79 I |
| (2) | K 58 $S_C$ 96 N 167 I |

Vergleichsbeispiel 1

In dem eine $S_B$- und $S_A$-Phase, jedoch keine $S_C$-Phase aufweisenden (1) wird durch Zusatz von nicht fluoriertem 4-(trans-4-Pentylcyclohexyl)-phenyl-4-octoxybenzoat (3) die höher geordnete $S_B$-Phase nicht unterdrückt. Eine Mischung aus 75 % (1) und 25 % (3) ist durch folgende Phasenfolge gekennzeichnet:
K (< RT) $S_B$ 57 $S_A$ 76 N 101 I

Beispiel 2 für flüssigkristalline Medien

In dem eine $S_B$- und $S_A$-Phase, jedoch keine $S_C$-Phase aufweisenden (1) wird durch Zugabe von trans-4-(trans-4-Pentylcyclohexyl)-cyclohexyl-2,3-difluor-4-octoxybenzoat (4) die höher geordnete $S_B$-Phase unterdrückt und eine $S_C$-Phase erzeugt.

| Flüssigkristall | Phasenfolge und -umwandlungstemperatur |
|---|---|
| (4) | K 90 $S_C$ 97 N 171 I |
| (1) | K 41 $S_B$ 62 $S_A$ 73 N 79 I |
| 50 % (4) + 50 % (1) | K (< RT) $S_C$ 65 $S_A$ 78 N 120 I |

Beispiel 3 für flüssigkristalline Medien

In dem eine $S_B$- und $S_A$-Phase, jedoch keine $S_C$-Phase aufweisenden (1) wird durch Zusatz von 4-(4-Pentylphenyl)phenyl-2,3-difluor-4-propyl-benzoat (5) die höher geordnete $S_B$-Phase unterdrückt und eine $S_C$-Phase erzeugt.

| Flüssigkristall | Phasenfolge und -umwandlungstemperatur |
|---|---|
| (1) | K 41 $S_B$ 62 $S_A$ 73 N 79 I |
| (5) | K 74 $S_C$ 86 N 160 I |
| 50 % (1) + 50 % (5) | K (< RT) $S_C$ 55 N 110 I |

Beispiel 4 für flüssigkristalline Medien

In dem eine $S_B$- und $S_A$-Phase, jedoch keine $S_C$-Phase aufweisenden (1) wird durch Zusatz von 2,3-Difluor-4-ethoxy4″-pentylterphenyl (6) die höher geordnete $S_B$-Phase unterdrückt und eine $S_C$-Phase erzeugt.

| Flüssigkristall | Phasenfolge und -umwandlungstemperatur |
|---|---|
| (1) | K 41 $S_B$ 62 $S_A$ 73 N 79 I |
| (6) | K 105 $S_C$ 135 N 185 I |
| 50 % (1) + 50 % (6) | $S_C$ 72 N 125 I |

Beispiel 5 für flüssigkristalline Medien

In dem eine $S_A$- und $S_B$-Phase, jedoch keine $S_C$-Phase aufweisenden (1) wird durch Zugabe von 4-Octylphenyl-2,3-difluoro-4-octoxybenzoat (7) die höher geordnete $S_B$-Phase unterdrückt und eine $S_C$-Phase erzeugt.

| Flüssigkristall | Phasenfolge und -umwandlungstemperatur |
|---|---|
| (7) | K 38 $S_C$ 49 N 57 I |
| (1) | K 41 $S_B$ 62 $S_A$ 73 N 79 I |
| 50 % (7) + 50 % (1) | K (< RT) $S_C$ 42 $S_A$ 58 N 68 I |

Beispiel 6 für flüssigkristalline Medien

In dem eine $S_A$- und $S_B$-Phase, jedoch keine $S_C$-Phase aufweisenden (1) wird durch zugabe von 2-(2,3-Difluor-4-nonoxyphenyl)-5-nonylpyrimidin(8) die höher geordnete $S_B$-Phase unterdrückt und eine $S_C$-Phase erzeugt.

| Flüssigkristall | Phasenfolge und -umwandlungstemperatur |
|---|---|
| (1) | K 41 $S_B$ 62 $S_A$ 73 N 79 I |
| (8) | K 41 $S_C$ 54 I |
| 50 % (1) + 50 % (8) | K (< RT) $S_C$ 37 $S_A$ |

Vergleichsbeispiel 2

In dem eine $S_A$- und $S_B$-Phase, jedoch keine $S_C$-Phase aufweisenden (1) wird durch Zusatz von 2-(4-octoxyphenyl)-5-nonylpyridin (9) die höher gerodnete $S_B$-Phase von (1) nicht unterdrückt und zudem bei höheren Konzentrationen von (1) keine $S_C$-Phase erzeugt.

| Flüssigkristall | Phasenfolge und -umwandlungstemperatur |
|---|---|
| (1) | K 41 $S_B$ 62 $S_A$ 73 N 79 I |
| (9) | Schmelztemperatur 39 °C; $S_C$ 81 I |
| 25 % (1) + 75 % (9) | $S_B$ 62 $S_C$ 72 $S_A$ 81 I |
| 50 % (1) + 50 % (9) | $S_B$ 57 $S_A$ 77 I |

Vergleichsbeispiel 3

In dem eine $S_A$- und $S_B$-Phase aufweisenden, jedoch keine $S_C$-Phase aufweisenden (1) wird auch durch Zusatz von nicht fluoriertem 2-(4-octoxyphenyl)-5-octylpyrimidin (14) eine $S_C$-Phase erzeugt.

| Flüssigkristall | Phasenfolge und -umwandlungstemperatur |
|---|---|
| (1) | K 41 $S_B$ 62 $S_A$ 73 N 79 I |
| (14) | K 36 $S_C$ 57 $S_A$ 64 N 69 I |
| 50 % (1) + 50 % (14) | K (< RT) $S_C$ 30 $S_A$ 61 N 70 I |

Die Phasenumwandlungstemperatur

$$T_{S_C-S_A}$$

dieser Mischung liegt jedoch mit 30 °C um 7 °C als die der Mischung aus Beispiel 6 (50 % (1) + 50 % (8)), obwohl die nicht fluorierte Pyrimidinverbindung (14) mit 57 °C eine um 3 °C höhere Temperatur für den Phasenübergang $S_C$-$S_A$ aufweist als Komponente (8) für den entsprechenden Phasenübergang $S_C$-I.

Beispiel 7 für flüssigkristalline Medien

In dem eine $S_A$- und $S_B$-Phase aufweisenden 1-(trans-4-Heptylcyclohexyl)-2-(4-(2-fluoro-4-heptylphenyl)-phenyl)ethan (10) wird durch Zusatz von (2) eine höher geordnete $S_B$-Phase unterdrückt und eine $S_C$-Phase erzeugt.

| Flüssigkristall | Phasenfolge und -umwandlungstemperatur |
|---|---|
| (2) | K 58 $S_C$ 96 N 167 I |
| (10) | K 25 $S_B$ 76 $S_A$ 93 N 104 I |
| 50 % (2) + 50 % (10) | K (< RT) $S_C$ 66 N 134 I |

Beispiel 8 für flüssigkristalline Medien

In dem eine $S_B$-Phase, jedoch keine $S_C$-Phase aufweisenden 1-(trans-4-pentylcyclohexyl)-4-hexanoyloxy-benzol (11) wird durch Zusatz von (2) die höher geordnete $S_B$-Phase unterdrückt und eine $S_C$-Phase erzeugt.

| Flüssigkristall | Phasenfolge und -umwandlungstemperatur |
|---|---|
| (2) | K 58 $S_C$ 96 N 167 I |
| (11) | K 35 $S_B$ 65 I |
| 50 % (2) + 50 % (11) | K (< RT) $S_C$ 34 N |

Beispiel 9 für flüssigkristalline Medien

In 2-(4-octoxyphenyl)-5-nonylpyridin (9), das neben einer $S_C$-Phase noch zwei höher geordnete smektische Phasen aufweist, werden durch Zugabe von (2) die höher geordneten smektischen Phasen von (9) bereits bei geringen Konzentrationen von (2) unterdrückt. Die höher geordneten smektischen Phasen von (9) werden mit $S^*$ bezeichnet, da der genaue Phasentyp nicht bestimmt wurde.

| Flüssigkristall | Phasenfolge und -umwandlungstemperatur |
|---|---|
| (2) | K 58 $S_C$ 96 N 167 I |
| (9) | K 39 $S_*$ 66 $S_*$ 69 $S_C$ 86 I |
| 8 % (2) + 92 % (9) | K (< RT) $S_C$ 86 N 87 I |
| 17 % (2) + 83 % (9) | K (< RT) $S_C$ 85 I |

Beispiel 10 für flüssigkristalline Medien

In dem neben einer $S_C$-Phase noch zwei höher geordnete Phasen aufweisenden (9) werden durch Zusatz von 2-(2,3-Difluoro-4-nonoxyphenyl)-5-nonylpyrimidin (8) die höher geordneten smektischen Phasen bereits bei geringen Konzentrationen von (8) unterdrückt.

| Flüssigkristall | Phasenfolge und -umwandlungstemperatur |
|---|---|
| (9) | K 39 $S_*$ 66 $S_*$ 69 $S_C$ 86 I |
| (8) | K 41 $S_C$ 54 I |
| 7 % (8) + 93 % (9) | K (< RT) $S_C$ 82 I |
| 13 % (8) + 87 % (9) | K (< RT) $S_C$ 80 I |
| 26 % (8) + 74 % (9) | K (< RT) $S_C$ 75 S |
| 40 % (8) + 60 % (9) | K (< (RT) $S_C$ 70 I |

Vergleichsbeispiel 4

In dem neben einer $S_C$-Phase noch zwei höher geordnete Phasen aufweisenden (9) werden durch Zusatz von nicht fluorierten 2-(4-octoxyphenyl)-5-octylpyrimidin (14) die höher geordneten smektischen Phasen nicht vollständig unterdrückt.

| Flüssigkristall | Phasenfolge und -umwandlungstemperatur |
|---|---|
| (9) | K 39 $S_*$ 66 $S_*$ 69 $S_C$ 86 I |
| (14) | K 36 $S_C$ 57 $S_A$ 64 N 69 I |
| 77 % (9) + 23 % (14) | K (< RT) $S_*$ 36 $S_C$ 80 I |

Beispiele 11 für flüssigkristalline Medien

In einem flüssigkristallinen Medium, bestehend aus

6 % 2-(4-Hexoxyphenyl)-5-heptylpyrimidin (15)

6 % 2-(4-Heptoxyphenyl)-5-heptylpyrimidin (16)

6 % 2-(4-Octoxyphenyl)-5-heptylpyrimidin (17)

8 % 2-(2,3-Difluoro-4-heptoxyphenyl)-5-heptylpyrimidin (18)

8 % 2-(2,3-Difluoro-4-nonoxyphenyl)-5-heptylpyrimidin (19)

14 % 2-(4-Octoxyphenyl)-5-octylpyridin (20)

14 % 2-(4-Hexoxyphenyl)-5-nonylpyridin (21)

14 % 2-(4-Heptoxyphenyl)-5-nonylpyridin (22)

14 % 2-(4-Octoxyphenyl)-5-nonylpyridin (12)

10 % 2-[4-(2-Chloro-3-dimethylpropionyloxy) phenyl]-5-heptylpyrimidin (23),

werden die höher geordneten smektischen Phasen der nicht fluorierten Pyridinderivate (12) und (20)-(22) durch Zusatz der difluorierten Pyrimidinderivate (18) und (19) unterdrückt.

Das flüssigkristalline Medium ist durch folgende Phasenfolge und -umwandlungstemperaturen gekennzeichnet:

$S_B$ (< -30 °C) $S_C$* 56 $S_A$ 64 Ch 67 I
Das flüssigkristalline Medium ist weiter durch eine Spontanpolarisation von $P_s$ = 11,2 nC/cm$^2$ bei 20 °C und durch folgende Schaltzeiten $\tau$ bei einer Feldstärke von 15 V/µm gekennzeichnet:

| T [°C] | $\tau$ [µs] |
|---|---|
| 40 | 20 |
| 20 | 46 |
| 0 | 112 |

Beispiel 12 für flüssigkristalline Medien

In einem flüssigkristallinen Medium, bestehend aus

6 % 2-(4-Hexoxyphenyl)-5-heptylpyrimidin (15)

6 % 2-(4-Heptoxyphenyl)-5-heptylpyrimidin (16)

6 % 2-(4-Octoxyphenyl)-5-heptylpyrimidin (17)

8 % 2-(3-Fluoro-4-heptoxyphenyl)-5-heptyl pyridin (24)

8 % 2-(3-Fluoro-4-nonoxyphenyl)-5-heptyl pyridin (25)

14 % 2-(4-Octoxyphenyl)-5-octylpyridin (20)

14 % 2-(4-Hexoxyphenyl)-5-nonylpyridin (21)

14 % 2-(4-Heptoxyphenyl)-5-nonylpyridin (22)

14 % 2-(4-Octoxyphenyl)-5-nonylpyridin (12)

10 % 2-[4-(2-Chloro-3-dimethylpropionyloxy) phenyl]-5-heptylpyrimidin (23),

werden die höher geordneten smektischen Phasen der nicht fluorierten Pyridinderivate (12) und (20)-(22) durch Zusatz der monofluorierten Pyridinderivate (24) und (25) unterdrückt.

Das flüssigkristalline Medium ist durch folgende Phasenfolge und -umwandlungstemperaturen gekennzeichnet:
$S_B$ (< -10) $S_C$* 54 $S_A$ 68 Ch 70 I
Das flüssigkristalline Medium ist weiter durch eine Spontanpolarisation von $P_s$ = 10,5 nC/cm$^2$ bei 20 °C und durch folgende Schaltzeiten $\tau$ bei einer Feldstärke von 15 V/µm gekennzeichnet:

| T [°C] | $\tau$ [µs] |
|---|---|
| 40 | 35 |
| 20 | 86 |
| 0 | 1720 |

Beispiele 13 für flüssigkristalline Medien

In einem flüssigkristallinen Medium, bestehend aus

6 % 2-(4-Hexoxyphenyl)-5-heptylpyrimidin (15)

6 % 2-(4-Heptoxyphenyl)-5-heptylpyrimidin (16)

6 % 2-(4-Octoxyphenyl)-5-heptylpyrimidin (17)

16 % 4-Octylphenyl-2,3-difluoro-4-octoxy benzoat ( 7)

14 % 2-(4-Octoxyphenyl)-5-octylpyridin (20)

14 % 2-(4-Hexoxyphenyl)-5-nonylpyridin (21)

14 % 2-(4-Heptoxyphenyl)-5-nonylpyridin (22)

14 % 2-(4-Octoxyphenyl)-5-nonylpyridin (12)

10 % 2-[4-(2-Chloro-3-dimethylpropionyloxy) phenyl]-5-heptylpyrimidin (23),

werden die höher geordneten smektischen Phasen der nicht fluorierten Pyridinderivate (12) und (20)-(22) durch Zusatz des difluorierten Benzoats (7) unterdrückt.

Das flussigkristalline Medium ist durch folgende Phasenfolge und -umwandlungstemperaturen gekennzeichnet:
$S_B$ (< -15) $S_C^*$ 55 $S_A$ 65 Ch 67 I
Das flussigkristalline Medium ist weiter durch eine Spontanpolarisation von $P_s$ = 10,8 nC/cm$^2$ bei 20 °C und durch folgende Schaltzeiten $\tau$ bei einer Feldstärke von 15 $^V/\mu m$ gekennzeichnet:

| T [°C] | $\tau$ [µs] |
|---|---|
| 40 | 22 |
| 20 | 49 |
| 0 | 157 |

Beispiel 14

In dem neben einer $S_C$-Phase noch zwei höher geordnete Phasen aufweisenden 2-(4-octoxyphenyl)-5-octylpyridin (20) werden durch Zusatz von trans-4-Propylcyclohexyl-2′,3′-difluor-4-ethoxytolan (28) die höher geordneten Phasen von (20) unterdrückt.

| Flüssigkristall | Phasenfolge und -umwandlungstemperatur |
|---|---|
| (20) | K 39 $S_*$ (29) $S_*$ 60 $S_C$ 82 I |
| (28) | K 84 N 229 I |
| 84 % (20) + 16 % (28) | $S_C$ 79 N 87 I |

Beispiel 15

In dem neben einer $S_C$-Phase noch zwei höher geordnete Phasen aufweisenden (20) werden durch zusatz von 4-Octoxy-2′,3′-difluor-4′-octoxybiphenyl (29) die höher geordneten Phasen von (20) unterdrückt.

| Flüssigkristall | Phasenfolge und -umwandlungstemperatur |
|---|---|
| (20) | K 39 $S_*$ (29) $S_*$ 60 $S_C$ 82 I |
| (29) | K 59 $S_C$ 59,5 N 63 I |
| 84 % (20) + 16 % (29) | $S_C$ 76 I |

Beispiel 16 für flüssigkristalline Medien

In dem eine $S_A$-Phase jedoch keine $S_C$-Phase aufweisenden trans-4-(trans-4-Pentylcyclohexyl)-cyclohexyl-4-octoxybenzoat (30) wird durch zugabe von trans-4-(trans-4-Pentylcyclohexyl)-cyclohexyl-2,3-difluor-4-octoxybenzoat (4) eine $S_C$-Phase erzeugt, wie aus Fig. 2 ersichtlich ist.

| Flüssigkristall | Phasenfolge und -umwandlungstemperatur |
|---|---|
| (30) | K 80 $S_A$ 140 N 182 I |
| ( 4) | K 90 $S_C$ 97 N 171 I |

Zur Erzeugung der $S_C$-Phase in der $S_A$-Komponente (30) ist nur eine relativ geringe Konzentration der $S_C$-Komponente (4) von etwa 20 % erforderlich. Die Mischung weist für Konzentrationen der $S_A$-Komponente (30), die unter 50 % liegen, eine Phasenübergangstemperatur

$$T_{S_C-S_A}$$

auf, die um bis zu 5 °C höher ist als die Phasenübergangstemperatur

$$T_{S_C-N}$$

der reinen $S_C$-Komponente (4).

Beispiel 17 für flüssigkristalline Medien

In dem eine $S_A$-Phase jedoch keine $S_C$-Phase aufweisenden 2,3-Difluor-4-octoxyphenyl-trans-4-(trans-4-pentylcyclohexyl)-cyclohexyl-carboxylat (31) wird durch Zugabe von (4) eine $S_C$-Phase erzeugt.

| Flüssigkristall | Phasenfolge und -umwandlungstemperatur |
|---|---|
| ( 4) | K 90 $S_C$ 97 N 171 I |
| (31) | K 58 $S_A$ 166 N 181 I |
| 50 % (4) + 50 % (31) | $S_C$ 82 $S_A$ 148 I |

Beispiel 18 für flüssigkristalline Medien

In dem eine $S_A$-Phase, jedoch keine $S_C$-Phase aufweisenden 4-Octylphenyl-4-octoxybenzoat (32) wird durch Zugabe von 4-Octylphenyl-2,3-difluor-4-octoxybenzoat (7) eine $S_C$-Phase erzeugt.

| Flüssigkristall | Phasenfolge und -umwandlungstemperatur |
|---|---|
| (32) | K 54 $S_A$ 64 N 66 I |
| ( 7) | K 38 $S_C$ 49 N 57 I |
| 50 % (32) + 50 % (7) | K (< RT) $S_C$ 48 $S_A$ 52 N 61 I |

Die Abkürzung RT steht für Raumtemperatur.

Beispiel 19 für flüssigkristalline Medien

In dem eine $S_A$-Phase, jedoch keine $S_C$-Phase aufweisenden (31) wird durch Zugabe von (7) eine $S_C$-Phase erzeugt.

| Flüssigkristall | Phasenfolge und -umwandlungstemperatur |
|---|---|
| (31) | K 58 $S_A$ 166 N 181 I |
| ( 7) | K 38 $S_C$ 49 N 57 I |
| 50 % (31) + 50 % (7) | $S_C$ 56 $S_A$ 91 N 110 I |

Die Phasenübergangstemperatur

$$T_{S_C-S_A}$$

der Mischung, in der die $S_A$-Komponente (31) und die $S_C$-Komponente (7) die gleiche Konzentration aufweisen, ist um 7 °C höher als die Phasenübergangstemperatur

$$T_{S_C-N}$$

der reinen $S_C$-Komponente (7).

Beispiel 20 für flüssigkristalline Medien

In dem eine $S_A$-Phase aufweisenden 1-(4-Octoxyphenyl)-1-bora-2,6-dioxa-trans-4-(trans-4-pentylcyclohexyl)-cyclohexan (33) wird durch zusatz von (2) eine $S_C$-Phase erzeugt.

| Flüssigkristall | Phasenfolge und -umwandlungstemperatur |
|---|---|
| ( 2) | K 58 $S_C$ 96 N 167 I |
| (33) | K 79 $S_A$ 178 I |
| 50 % (2) + 50 % (33) | $S_C$ 98 $S_A$ 147 N 159 I |

Beispiel 21 für flüssigkristalline Medien

In dem eine $S_B$-Phase aufweisenden 4-Pentylphenyl-trans-4-(trans-4-butylcyclohexyl)-cyclohexylcarboxylat (34) wird durch zusatz von (2) eine $S_C$-Phase erzeugt.

| Flüssigkristall | Phasenfolge und -umwandlungstemperatur |
|---|---|
| ( 2) | K 58 $S_C$ 96 N 167 I |
| (34) | K 7 $S_B$ 169 N 185 I |
| 50 % (2) + 50 % (34) | $S_C$ 68 $S_A$ 122 N |

Beispiel 22 für flüssigkristalline Medien

In dem eine $S_B$-Phase, jedoch keine $S_C$-Phase aufweisenden 4-Heptylphenyl-4-pentyl-cyclohexyl-carboxylat (35) wird durch zusatz von (2) eine $S_C$-Phase erzeugt.

| Flüssigkristall | Phasenfolge und -umwandlungstemperatur |
|---|---|
| ( 2) | K 58 $S_C$ 96 N 167 I |
| (35) | K 39 $S_B$ 47 N 51 I |
| 50 % (2) + 50 % (35) | $T_{S_C-N}$ = 25 °C |

Beispiel 23 für flüssigkristalline Medien

In dem eine $S_B$-Phase, jedoch keine $S_C$-Phase aufweisenden 1-(trans-4-pentylcyclohexyl)-4-hexanoyloxy-benzol (11) wird durch zusatz von (2) eine $S_C$-Phase erzeugt.

| Flüssigkristall | Phasenfolge und -umwandlungstemperatur |
|---|---|
| (2) | K 58 $S_C$ 96 N 167 I |
| (11) | K 35 $S_B$ 65 I |
| 50 % (2) + 50 % (11) | K (< RT) $S_C$ 34 N |

Beispiel 24 für flüssigkristalline Medien

In dem eine $S_A$- und $S_B$-Phase aufweisenden 4-Octoxyphenyl-trans-4-heptylcyclohexyl-carboxylat (36) wird durch Zusatz von 2,3-Difluoro-4-octoxyphenyl-trans-4-pentylcyclohexyl-carboxylat (37) eine $S_C$-Phase erzeugt.

| Flüssigkristall | Phasenfolge und -umwandlungstemperatur |
|---|---|
| (36) | K 44 $S_B$ 67 $S_A$ 78 N 81 I |
| (37) | K 30 N 60 I |
| 47 % (36) + 53 % (37) | $S_C$ 36,3 N |
| 61 % (36) + 39 % (37) | $S_C$ 42 $S_A$ 54 N |
| 69 % (36) + 31 % (37) | $S_C$ 42 $S_A$ 60 N |

**Patentansprüche**

1. Flüssigkristallmedium mit einer smektisch-C-Phase, enthaltend mindestens 2 flüssigkristalline Komponenten A und B, wobei Komponente A aus einer oder mehreren Verbindungen besteht und Komponente A und/oder die diese Komponente bildenden Verbindungen eine oder mehrere orthogonale und/oder höher geordnete getiltete smektische Phasen und gegebenenfalls eine smektisch-C-Phase aufweisen, wobei weiter Komponente B aus einer oder mehreren Verbindungen besteht und Komponente B und/oder die diese Komponente bildenden Verbindungen gegebenenfalls eine smektisch-C-Phase aufweisen, dadurch gekennzeichnet, daß Komponente B zur Unterdrückung der höher geordneben smektischen Phasen und/oder - falls weder Komponente A noch Komponente B noch die diese Komponenten bildenden Verbindungen eine smektisch-C-Phase aufweisen - zur Erzeugung der smektisch-C-Phase mindestens eine Verbindung mit dem Strukturelement 2-Fluor-1,4-phenylen oder 2,3-Difluor-1,4-phenylen enthält.

2. Flüssigkristallmedium nach Anspruch 1, dadurch gekennzeichnet, daß Komponente B mindestens eine Verbindung der Formel I enthält,

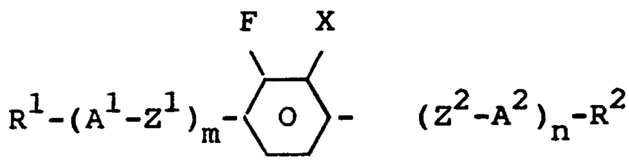

I

worin

| | |
|---|---|
| $R^1$ und $R^2$ | jeweils unabhängig voneinander unsubstituiertes, einfach durch Cyan oder mindestens einfach durch Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, -S-, -CO-, -O-CO-, -CO-O- oder -O-CO-O- ersetzt sein kann, einer der Reste $R^1$ und $R^2$ auch einen Chiralität induzierten organischen Rest Q* mit einem asymmetrischem Kohlenstoffatom, |
| $A^1$ und $A^2$ | jeweils unabhängig voneinander unsubstituiertes oder durch ein oder zwei F-Atome substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl- oder 1,2,3,4-Tetrahydronaphthalin-2,6-diyl, |
| $Z^1$ und $Z^2$ | jeweils unabhängig voneinander -CO-O-, -O-CO-, $-CH_2CH_2-$, $-OCH_2-$, $-CH_2O-$, -C≡C- oder eine Einfachbindung, |
| X | H oder F, |
| m und n | jeweils 0, 1 oder 2, und |
| (m + n) | 1 oder 2 bedeutet. |

**3.** Flüssigkristallmedium nach Anspruch 2, dadurch gekennzeichnet, daß Q* einen Rest der Formel II

$-Q^1-C^*R^\circ X-Q^2-R^2$ II

bedeutet, worin

| | |
|---|---|
| $Q^1$ und $Q^2$ | jeweils unabhängig voneinander Alkylen mit 2 bis 4-C-Atomen, worin auch eine $CH_2$-Gruppe durch -O-, -S-, -CO-, -O-CO-, -CO-O-, -S-CO-, -CO-S-, -CH=CH-COO-, -CH=CH-, -CHHalogen und/oder -CHCN- ersetzt sein kann, oder eine Einfachbindung, |
| X | Halogen, CN, $CH_3$, $CH_2CN$ oder $OCH_3$, |
| $R^\circ$ | H oder eine von X und $-Q^2-R^2$ verschiedene Alkylgruppe mit 1 bis 10 C-Atomen, und |
| C* | ein mit vier verschiedenen Substituenten verknüpftes Kohlenstoffatom bedeutet. |

**4.** Flüssigkristallmedium nach mindestens einem der Ansprüche 1-3, dadurch gekennzeichnet, daß die Spontanpolarisation der Flüssigkristallmischung $P_s$ größer als 1 $nC/cm^2$ ist.

**5.** Flüssigkristallmedium nach mindestens einem der Ansprüche 1-4, dadurch gekennzeichnet, daß die Flüssigkristallmischung mindestens einen chiralen Dotierstoff enthält.

**6.** Flüssigkristallmedium nach Anspruch 5, dadurch gekennzeichnet, daß der chirale Dotierstoff eine Spontanpolarisation $P_s > 5$ $nC/cm^2$ aufweist.

**7.** Elektrooptisches System, dadurch gekennzeichnet, daß das System als Dielektrikum ein Flüssigkristallmedium nach mindestens einem der Ansprüche 1-5 enthält.

**8.** Verwendung eines Flüssigkristallmediums nach mindestens einem der Ansprüche 1-5 in einem elektrooptischen System.

## Claims

**1.** Liquid-crystal medium having a smectic C phase, containing at least two liquid-crystalline components A and B, where component A comprises one or more compounds and component A and/or the compounds forming this component have one or more orthogonal and/or more highly ordered, tilted,

smectic phases and optionally a smectic C phase, and where furthermore component B comprises one or more compounds and component B and/or the compounds forming this component optionally have a smectic C phase, characterized in that, in order to suppress the more highly ordered, smectic phases and/or - if neither component A nor component B nor the compounds forming these components have a smectic C phase - in order to generate the smectic C phase, component B contains at least one compound containing the structural unit 2-fluoro-1,4-phenylene or 2,3-difluoro-1,4-phenylene.

**2.** Liquid-crystal medium according to Claim 1, characterized in that component B contains at least one compound of the formula I

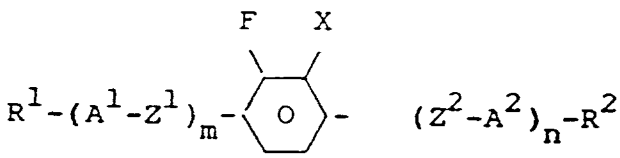

I

in which

| | |
|---|---|
| $R^1$ and $R^2$ | are each, independently of one another, alkyl having 1 to 15 carbon atoms or alkenyl having 3 to 15 carbon atoms, each of which is unsubstituted, monosubstituted by cyano or at least monosubstituted by fluorine or chlorine, where one $CH_2$ group in each of these radicals may be replaced by -O-, -S-, -CO-, -O-CO-, -CO-O-, or -O-CO-O-, and one of the radicals $R^1$ and $R^2$ is alternatively a chirality-inducing organic radical Q* containing an asymmetrical carbon atom, |
| $A^1$ and $A^2$ | are each, independently of one another, unsubstituted or mono- or di-F-substituted 1,4-phenylene, in which, in addition, one or two CH groups may be replaced by N, 1,4-cyclohexylene, in which, in addition, one or two non-adjacent CH groups may be replaced by O atoms and/or S atoms, piperidine-1,4-diyl,1,4-bicyclo(2,2,2)octylene, 1,3,4-thiadiazole-2,5-diyl, naphthaline-2,6-diyl or 1,2,3,4-tetrahydronaphthaline-2,6-diyl, |
| $Z^1$ and $Z^2$ | are each, independently of one another, -CO-O-, -O-CO-, $-CH_2CH_2-$, $-OCH_2-$, $-CH_2-O-$, -C≡C- or a single bond, |
| X | is H or F, |
| m and n | are each 0, 1 or 2, and |
| (m + n) | is 1 or 2. |

**3.** Liquid-crystal medium according to Claim 2, characterized in that Q* is a radical of formula II

$-Q^1-C^*R^{\circ}X-Q^2-R^2$     II

in which

| | |
|---|---|
| $Q^1$ and $Q^2$ | are each, independently of one another, alkylene having 2 to 4 carbon atoms, in which, in addition, one $CH_2$ group may be replaced by -O-, -S-, -CO-, -O-CO-, -CO-O-, -S-CO-, -CO-S-, -CH=CH-COO-, -CH=CH-, CHhalogen and/or -CHCN-, or a single bond, |
| X | is halogen, CN, $CH_3$, $CH_2CN$ or $OCH_3$, |
| $R^{\circ}$ | is H or an alkyl group having 1 to 10 carbon atoms which is different from X and $-Q^2-R^2$, and |
| C* | is a carbon atom linked to four different substituents. |

**4.** Liquid-crystal medium according to at least one of Claims 1-3, characterized in that the spontaneous polarization of the liquid-crystal mixture $P_s$ is greater than 1 $nC/cm^2$.

**5.** Liquid-crystal medium according to at least one of Claims 1-4, characterized in that the liquid-crystal mixture contains at least one chiral dope.

**6.** Liquid-crystal medium according to Claim 5, characterized in that the chiral dope has a spontaneous polarization $P_s$ of > 5 $nC/cm^2$.

7. Electro-optical system, characterized in that the systems contains, as dielectric, a liquid-crystal medium according to at least one of Claims 1-5.

8. Use of a liquid-crystal medium according to at least one of Claims 1-5 in an electro-optical system.

## Revendications

1. Milieu en cristaux liquides ayant une phase C smectique, contenant au moins 2 composants en cristaux liquides A et B, dans lequel le composant A consiste en un ou plusieurs composés et le composant A et/ou les composés formant ce composé présentent une ou plusieurs phases smectiques orthogonales et/ou hautement ordonnées et éventuellement une phase C smectique, tandis qu'en outre le composant B consiste en un ou plusieurs composés et le composant B et/ou les composés formant ce composant présentent éventuellement une phase C smectique, caractérisé en ce que le composant B contient au moins un composé ayant un élément structural 2-fluoro-1,4-phénylène ou 2,3-difluoro-1,4-phénylène, pour supprimer les phases smectiques hautement ordonnés et/ou - dans le cas où ni le composant A, ni le composant B, ni les composés formant ces composants ne présentent une phase C smectique - pour produire la phase C smectique.

2. Milieu en cristaux liquides selon la revendication 1, caractérisé en ce que le composant B contient au moins un composé de formule I,

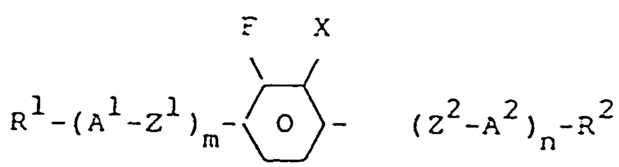

I

où

$R^1$ et $R^2$ représentent chacun, indépendamment l'un de l'autre, un groupe alkyle ayant 1 à 15 atomes de carbone ou alcényle ayant 3 à 15 atomes de carbone, non substitué, substitué une fois par un radical cyano ou substitué au moins une fois par un radical fluoro ou chloro, tandis que dans chacun de ces restes également un groupe $CH_2$ peut être remplacé par -O-, -S-, -CO-, -O-CO-, -CO-O- ou -O-CO-O, l'un des restes $R^1$ et $R^2$ représentant également un reste organique Q* induit par la chiralité, ayant un atome de carbone asymétrique,

$A^1$ et $A^2$ représentent chacun, indépendamment l'un de l'autre, un groupe 1,4-phénylène non substitué ou substitué par un ou deux atomes F, dans lequel également un ou deux groupes CH peuvent être remplacés par N, 1,4-cyclohexylène, dans lequel également un ou deux groupes $CH_2$ non contigus peuvent être remplacés par des atomes O et/ou des atomes S, pipéridine-1,4-diyle, 1,4-bicyclo-(2,2,2)-octylène, 1,3,4-thiadiazole-2,5-diyle, naphtalène-2,6-diyle ou 1,2,3,4-tétranydronaphtalène-2,6-diyle,

$Z^1$ et $Z^2$ représentent chacun, indépendamment l'un de l'autre, -CO-O-, -O-CO-, $-CH_2CH_2-$, $-OCH_2-$, $-CH_2O-$, -C≡C- ou une liaison simple,

X désigne H ou F,

m et n valent chacun 0, 1 ou 2, et

(m + n) vaut 1 ou 2.

3. Milieu en cristaux liquides selon la revendication 2, caractérisé en ce que Q* désigne un reste de formule II

$Q^1\text{-}C^*R^\circ X\text{-}Q^2\text{-}R^2$ II

où

$Q^1$ et $Q^2$ représentent, chacun indépendamment l'un de l'autre, un groupe alkylène ayant 2 à 4 atomes C, dans lequel également un groupe $CH_2$ peut être remplacé par -O-, -S-, -CO-, -O-CO-, -CO-O-, -S-, CO-,-CO-S-, -CH=CH-COO-, -CH=CH-, -CHhalogène et/ou -CHCN-, ou une liaison simple,

X représente un halogène, CN, $CH_3$, $CH_2CN$ ou $OCH_3$,
R° représente H ou un groupe alkyle différent de X et -$Q^2$-$R^2$-, ayant 1 à 10 atomes C, et
C* désigne un atome de carbone relié à quatre substituants différents.

**4.** Milieu en cristaux liquides selon l'une au moins des revendications 1-3, caractérisé en ce que la polarisation spontanée du mélange en cristaux liquides $P_s$ est supérieure à 1 nC/cm$^2$.

**5.** Milieu en cristaux liquides selon l'une au moins des revendications 1-4, caractérisé en ce que le milieu en cristaux liquides contient au moins une substance dopante chirale.

**6.** Milieu en cristaux liquides selon la revendication 5, caractérisé en ce que la substance dopante chirale présente une polarisation spontanée Ps > 5 nC/cm$^2$.

**7.** Système électro-optique caractérisé en ce que le système contient en tant que diélectrique un milieu en cristaux liquides selon au moins l'une des revendications 1-5.

**8.** Utilisation d'un milieu en cristaux liquides selon au moins l'une des revendications 1-5 dans un système électro-optique.

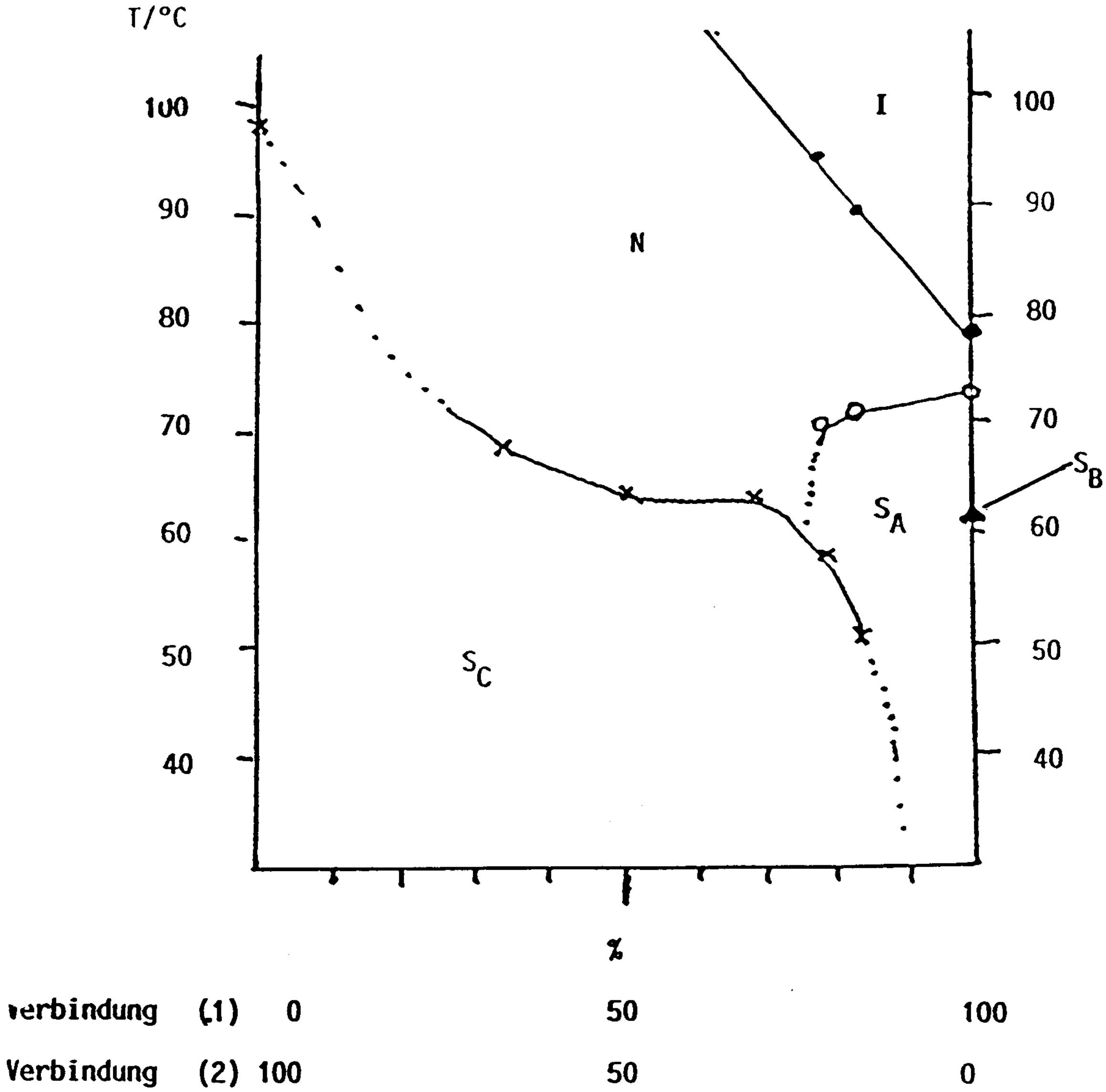
T/°C
100
90
80
70
60
50
40
I
N
$S_A$
$S_B$
$S_C$
100
90
80
70
60
50
40
%
Verbindung (1) 0 50 100
Verbindung (2) 100 50 0

Figur 1

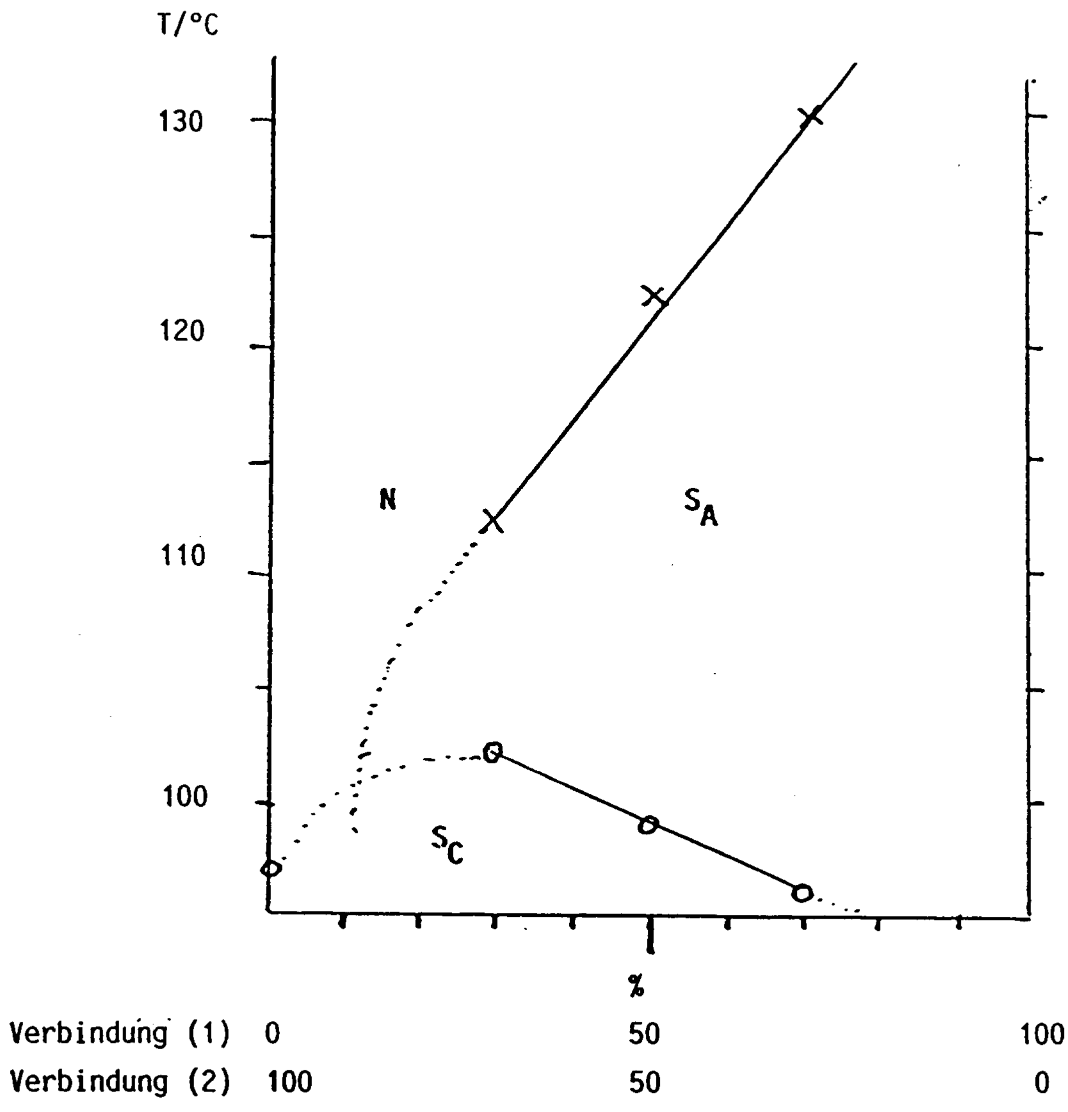
T/°C
130
120
110
100
N
SA
SC
%
Verbindung (1) 0 50 100
Verbindung (2) 100 50 0

Figur 2